(19) Europäisches Patentamt European Patent Office Office européen des brevets

(11) **EP 4 711 741 A1**

(12) **EUROPEAN PATENT APPLICATION**
published in accordance with Art. 153(4) EPC

(43) Date of publication:
**18.03.2026 Bulletin 2026/12**

(21) Application number: 25806875.8

(22) Date of filing: **13.05.2025**

(51) International Patent Classification (IPC):
*G01N 3/10* (2006.01)      *G01L 1/00* (2006.01)

(86) International application number:
**PCT/CN2025/094432**

(87) International publication number:
**WO 2025/241936 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.05.2024  CN 202410652747**

(71) Applicant: **China Ship Scientific Research Center
Wuxi, Jiangsu 214082 (CN)**

(72) Inventors:
• WANG, Yao
  Wuxi, Jiangsu 214082 (CN)
• SHI, Dongchun
  Wuxi, Jiangsu 214082 (CN)
• LIU, Shuai
  Wuxi, Jiangsu 214082 (CN)

(74) Representative: **Lapienis, Juozas
MSP Europe UAB
21-92 Seimyniskiu Str.
09236 Vilnius (LT)**

(54) **TESTING DEVICE FOR MECHANICAL PROPERTIES OF BUOYANCY MATERIAL IN DEEP-SEA ENVIRONMENT, AND TESTING METHOD**

(57)      An apparatus for testing a mechanical property of a buoyancy material in an abyssal environment and a test method are provided. The apparatus includes a split-type high-pressure tank. An independent tester is fixedly mounted inside the high-pressure tank. The tester includes a rack fixed inside the high-pressure tank by using mounting screws. A base is disposed on an upper surface of the rack. A column is vertically mounted to the base. A guide key is mounted to the column. A spherical-cage apparatus is mounted at a top of the column by using a ball holder. A spherical test piece is disposed inside the spherical-cage apparatus. A bottom of the spherical-cage apparatus is connected to a grating assembly by using a hook. A guide mechanism and a support are respectively mounted at a middle part and a lower part of the column. A light sensor and a light source are respectively disposed on two sides of the grating assembly. A bottom of the grating assembly is connected to the base by using a metering tension spring. Therefore, the mechanical property of the buoyancy material can be conveniently tested, to provide a new and effective method for performing technical judgment on the buoyancy material used in the abyssal environment, determining an effect generated in research of the buoyancy material, satisfying a balanced design requirement of a submersible, and the like.

FIG. 1

Description

## TECHNICAL FIELD

The present invention relates to the technical field of apparatuses for testing a mechanical property, and in particular, to an apparatus for testing a mechanical property of a buoyancy material in an abyssal environment and a test method.

## BACKGROUND

The dark, low-temperature, and high-pressure deep ocean is a last mystery environment of the earth, and is a cutting-edge that includes a significant breakthrough of international earth science, in particular, ocean science. An increase in a cognitive capability and a technical equipment level of the deep ocean will become a commanding height of maintaining maritime rights and interests and ocean resource development of our country. Because a submersible has comprehensive capabilities such as carrying various dedicated devices and personnel to quickly, precisely, continuously travel back and forth between various abyssal environments, and perform scientific investigation, on-site exploration, and development operation, the submersible provides important technical guarantee for going to deep and high ocean and becoming a strong maritime country in the twenty-first century. A good balancing capability is a vital basic property of the submersible, and is important guarantee for implementing a submarine mobile voyage and stable underwater operation of the submersible. A buoyancy material used in the submersible is a pressure-resistant material whose density is lower than that of a work environment medium and that is assembled on the submersible, and provides the submersible with buoyancy required for underwater balance.

A smaller density of the buoyancy material used in the submersible indicates larger net buoyancy that can be provided. Currently, most buoyancy materials that can support use of the submersible in a full-ocean-depth range include macromolecular polymers. Researches have been made to show that, under a large water pressure in the abyssal environment, in a macroscopic view, a physical volume of the macromolecular polymer is reduced, and consequently, an amount of liquid displaced by the macromolecular polymer is reduced. In a microscopic view, due to infiltration of water molecules (ocean water), the density of the buoyancy material is increased, and consequently, the net buoyancy provided by the buoyancy material is further decreased.

Researches have been made to show that pressure resistance of the macromolecular polymer is also closely related to an external temperature. A higher temperature indicates poorer pressure resistance of the macromolecular polymer, and liquid or gas is more easily infiltrated into the buoyancy material.

In the existing technology, a test method in a normal pressure environment is usually used to test and research the buoyancy material used in the abyssal environment, and real process data of a change in the net buoyancy of the buoyancy material in the abyssal environment cannot be involved.

In the existing technology, a property of the buoyancy material is mainly measured by measuring a water absorption property of the buoyancy material. Specifically, a sample is placed in a simulated abyssal environment, then a water pressure is removed, and a water absorption mass fraction is measured by using a weighting and metering method. Although it is proved that the water absorption property is related to a water pressure of an environment in which the buoyancy material is located, data of a water absorption process of the buoyancy material in the abyssal environment is not obtained through testing. In addition, in a pressure release process, a molecular structure and a volume of the sample also change as the pressure changes, and the measured water absorption property is not a water absorption property under a real compressed condition.

## SUMMARY

### Technical problem

A current situation is summarized as: a mechanical property of a buoyancy material in an abyssal environment is related to work safety of a submersible in the abyssal environment. In the existing technology, a systematicness degree and a scientificalness degree of testing the mechanical property of the buoyancy material in the abyssal environment are insufficient. In a current technical condition, measurement of the mechanical property of the buoyancy material cannot satisfy a requirement for an accurate and balanced design of the submersible, and cannot provide a related technical basis in aspects such as automatic control and safety warning for deep diving work of the submersible.

### Technical solution

For the foregoing defects in the current production technologies, the applicant provides an apparatus for testing a mechanical property of a buoyancy material in an abyssal environment and a test method. Therefore, the mechanical property of the buoyancy material can be conveniently tested, to provide a new and effective method for performing technical judgment on the buoyancy material used in the abyssal environment, determining an effect generated in research of the buoyancy material, satisfying a balanced design requirement of a submersible, and the like.

The technical solutions used in the present invention are as follows:
An apparatus for testing a mechanical property of a buoyancy material in an abyssal environment is provided. The apparatus includes a split-type high-pressure tank. An independent tester is fixedly mounted inside the high-pressure tank. A specific structure of the tester includes a rack fixed inside the high-pressure tank by using mounting screws. A base is disposed on an upper surface of the rack. A column is vertically mounted to the base. A guide key is mounted to the column. A spherical-cage apparatus is mounted at a top of the column by using a ball holder. A spherical test piece is disposed inside the spherical-cage apparatus. A bottom of the spherical-cage apparatus is connected to a grating assembly by using a hook. A guide mechanism and a support are respectively mounted at a middle part and a lower part of the column. A light sensor and a light source are respectively disposed on two sides of the grating assembly. A bottom of the grating assembly is connected to the base by using a metering tension spring. A safety valve port is disposed on a top surface of the high-pressure tank. A water channel port is disposed at a bottom of the high-pressure tank.

Further technical solutions of the present invention are as follows:
A structure of the spherical-cage apparatus includes an upper spherical shell and a lower spherical shell that correspond to each other upward and downward. The upper spherical shell and the lower spherical shell each are of a hollow-out structure. The upper spherical shell and the lower spherical shell are tightly locked by using spherical-shell screws. Space for placing the spherical test piece is formed inside. The hook is disposed at a middle position of a bottom surface of the lower spherical shell. A weight tray is fixed to the hook. The weight tray carries a weight A and a weight B.

A radius of an inner surface of the spherical-cage apparatus is greater than a radius of the spherical test piece.

The ball holder includes a ball-holder guide sleeve sleeved on the column. A ball-holder guide slot is provided on an inner wall surface of the ball-holder guide sleeve. The ball-holder guide slot slidably fits the guide key. A ball-holder locking stud is mounted on an outer wall surface of the ball-holder guide slot. The outer wall surface of the ball-holder guide slot on a side opposite to the ball-holder locking stud is connected to a bracket by using a bracket locking nut. The bracket is of an arc structure.

A structure of the guide mechanism includes a guide-mechanism guide sleeve mounted to fit the column. A guide-mechanism guide slot fitting the guide key is disposed inside the guide-mechanism guide sleeve. A guide-mechanism locking stud is mounted on an outer wall surface of the guide-mechanism guide sleeve. The outer wall surface of the guide-mechanism guide sleeve on a side opposite to the guide-mechanism locking stud is connected to a pull-rod guide sleeve by using a horizontal rod. A section of the pull-rod guide sleeve is of a semicircular structure.

A structure of the grating assembly includes a grating support. A grating is mounted to the grating support by using a grating frame. The grating is a glass plate with high transparency. Grating fringes and visually read scales are finely inscribed on a surface of the grating.

A structure of the high-pressure tank includes a tank body. An upper tank cap is mounted by using a sealing ring to fit an upper part of the tank body. A lower tank cap is mounted by using a sealing ring to fit a lower part of the tank body. The water channel port is disposed at the lower tank cap. A light-source cable outlet seal is disposed to provide sealing for leading a light-source pressure-resistant cable to the outside of the high-pressure tank. A light-sensor cable outlet seal is disposed to provide sealing for leading a light-sensor pressure-resistant cable to the outside of the high-pressure tank. High-pressure-tank support legs are disposed to fix the high-pressure tank. Lifting lugs are specified force-bearing points when the tank body and the upper tank cap are assembled or disassembled. An upper-tank-cap fixing bolt group implements assembly and disassembly of the upper tank cap. A tank-body fixing bolt group implements assembly and disassembly of the tank body. A tester mounting plate is a support body of the tester.

A test method of an apparatus for testing a mechanical property of a buoyancy material in an abyssal environment is provided. The method includes the following operation steps:

S1. test preparation work:
preparing a spherical test piece, performing measurement and calculation on the spherical test piece, performing measurement and calculation by using a metering tension spring, determining weights of tester components in an atmospheric environment, determining a total weight of the tester components after the tester components enter water, determining weights of a weight A and a weight B, and determining a total weight of the weight A and the weight B after the weight A and the weight B enter water; and recording all data and calculation results in a test preparation stage;

S2. assembly and debugging stage:

when it is determined through check that a surface of the spherical test piece has no defect such as a crack or a recess, mounting the spherical test piece into a lower spherical shell, closing an upper spherical shell, tightly locking a spherical-shell screw, and placing the weight A and the weight B on a weight tray, to complete assembling a spherical-cage apparatus;

in a laboratory environment, mounting a tension-spring anchor, a tension-spring pin, the metering tension spring, the spherical-cage apparatus, a ball holder, a grating assembly, a guide mechanism, a support, a light sensor, and a light source on a rack;

mounting a mounted and debugged tester on a tester mounting plate, fixing the tester by using mounting screws, and determining that a column on the rack is in a plumb state;

adjusting heights and positions of the ball holder, the grating assembly, the guide mechanism, the support, the light sensor, and the light source; determining that a pull rod is in the plumb state, and is parallel to the column; determining that the pull rod well fits a pull-rod guide sleeve, and the pull rod can flexibly move upward and downward within the pull-rod guide sleeve without freezing and lagging; determining that the ball holder can stably hold the spherical-cage apparatus; and powering on to check and determine that a built-in grating reader in the light sensor can obtain measurement data in a full range, and a built-in micro camera can clearly obtain image information of visually read scales, where

zero-position calibration of the tester is theoretically performed when the metering tension spring does not bear a force, and during actual operation, zero-position calibration is performed when the metering tension spring is maintained in an original length, a height position of the support is calibrated, it is determined that an indicator points to a start position of the visually read scales, and then a display value measured by the built-in grating reader is set to a reading "0"; and

after zero-position calibration of the tester is performed, sealing a lead-out part of a light-source pressure-resistant cable by using a light-source cable outlet seal, and sealing a lead-out part of a light-sensor pressure-resistant cable by using a light-sensor cable outlet seal;

S3. entering-water test stage:

after assembly and debugging are completed, mounting a tank body above a lower tank cap, sealing the tank body by using a tank-body sealing ring, and tightly fixing the tank body by using a tank-body fixing bolt group;

injecting test water from a water channel port to a high-pressure tank on which no upper tank cap is mounted, visually determining whether the spherical-cage apparatus can smoothly float during water injection, and monitoring whether a pull force displayed on a screen of a computer increases and whether an image shot by the built-in micro camera indicates that a value indicated by the indicator is synchronous with the pull force displayed on the screen;

stopping water injection when a water level rises to a height position at which the spherical-cage apparatus is submerged, visually measuring whether the spherical-cage apparatus leaves the ball holder after the spherical-cage apparatus floats upward, and if the spherical-cage apparatus does not leave the ball holder or a leaving height is insufficient, and it is estimated that a loss of a floating force is caused after the spherical test piece absorbs water, and the spherical-cage apparatus falls on the ball holder, adjusting a height of the ball holder again, and fixing the ball holder at a reliable height, to ensure that the spherical-cage apparatus does not sit on the ball holder in a pressurization test; and

stopping water injection, and after a water surface is still, accurately reading an elongation amount of the metering tension spring by using the built-in grating reader, and roughly reading the elongation amount of the spring by using the built-in micro camera;

S4. simulation test stage:

mounting the upper tank cap above the tank body, sealing the upper tank cap by using an upper-tank-cap sealing ring, tightly fixing the upper tank cap by using an upper-tank-cap fixing bolt group, and injecting test water into the complete high-pressure tank again through the water channel port until an inner cavity of the high-pressure tank is fully filled; and

adjusting an inner sea water density of the high-pressure tank, regulating an inner sea water temperature of the high-pressure tank, and increasing an inner sea water pressure of the high-pressure tank step by step for factors affecting the mechanical property of the buoyancy material: a sea water density, a sea water temperature, and a work depth, performing testing step by step, and recording a buoyancy change and a change process of the spherical test piece, where

a test item and a test process in a test performed for an impact of the sea water density on buoyancy are the same as a test item and a test process in the entering-water test stage; and

S5:

in a test performed for an impact of a sea water depth on the buoyancy, when the sea water temperature maintains unchanged, performing a related pressurization or depressurization procedure on a test medium, and observing and recording buoyancy actually generated by the spherical test piece, net buoyancy provided by the spherical test piece, and a change process of the spherical test piece;

in a test performed for an impact of the sea water temperature on the buoyancy, when the work depth maintains unchanged, adjusting a temperature of the test medium, and observing and recording the buoyancy actually generated by the spherical test piece, the net buoyancy provided by the spherical test piece, and the change process of the spherical test piece;

uniformly recording, in a table, data determined and data calculated in a simulation work test stage; and

a large amount of data needs to be recorded in a test process, performing processing and calculation by using a computer, to obtain a test result, and intuitively displaying the test result by using a graph, a table, and the like.

**Beneficial effects**

The present invention has a compact and reasonable structure and is convenient to operate, so that net buoyancy generated by a test sample of a buoyancy material can be conveniently measured, thereby effectively resolving a problem of real-time measurement of a mechanical property of the buoyancy material in a simulated abyssal environment, and truly reflecting a mechanical property of the buoyancy material in an abyssal environment. Mechanical properties of the buoyancy material and change processes of the properties of the buoyancy material under different water pressures, different water temperatures, and different densities are measured, so that a change in the mechanical property of the buoyancy material can be systematically controlled, to obtain a change law. In addition, the present invention provides a new and effective method for performing technical judgment on the buoyancy material used in the abyssal environment, determining an effect generated in research of the buoyancy material, satisfying a balanced design requirement of a submersible, and the like. A test result of the present invention is applicable to aspects such as automatic submersible control, so that safety and controllability during deep diving work of the submersible can be improved.

The present invention is further applicable to measurement of a standard block of another buoyancy material, a product of a buoyancy block, and the like.

**BRIEF DESCRIPTION OF THE DRAWINGS**

FIG. 1 is a diagram (in which a part of a tank body is omitted, and an internal structure is shown) of a technical framework according to the present invention;

FIG. 2 is a schematic composition diagram of a structure of a tester according to the present invention;

FIG. 3 is a schematic composition diagram of a structure of a spherical-cage apparatus according to the present invention;

FIG. 4 is a schematic diagram of a structure of a ball holder according to the present invention;

FIG. 5 is a schematic diagram of a structure of a grating assembly according to the present invention;

FIG. 6 is a schematic diagram of a structure of a photoelectric apparatus according to the present invention;

FIG. 7 is a schematic diagram of a structure of a grating according to the present invention;

FIG. 8 is a schematic diagram of a structure of a vernier according to the present invention;

FIG. 9 is a schematic diagram of mounting of a tester according to the present invention; and

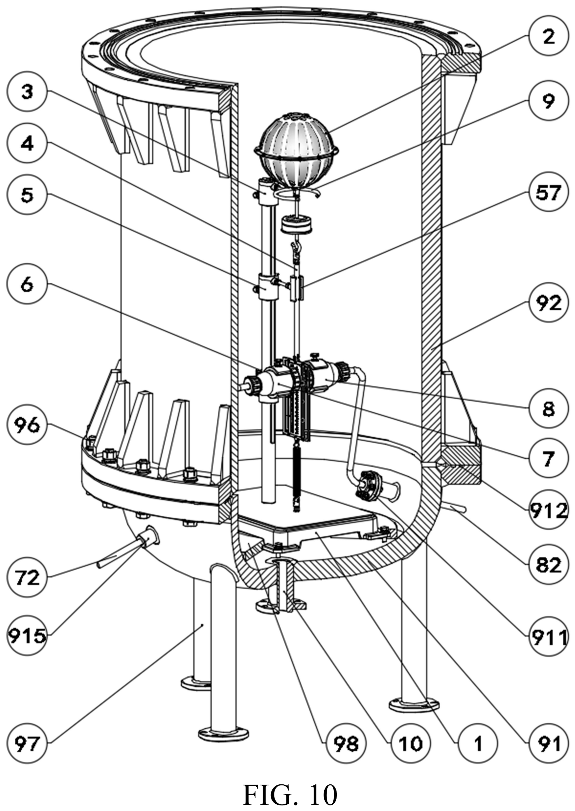

FIG. 10 is a schematic diagram of a structure in an entering-water test stage according to the present invention.

In the accompanying drawings:

1. rack;

11. guide key; 12. column; 13. base; 14. mounting screw; 15. tension-spring-anchor locking nut; 16. tension-spring anchor; 17. tension-spring pin; 18. metering tension spring;

2. spherical-cage apparatus;

21. upper spherical shell; 22. spherical-shell screw; 23. spherical test piece; 24. lower spherical shell; 25. weight A; 26. weight B; 27. weight tray; 28. hook;

3. ball holder;

31. ball-holder guide sleeve; 32. ball-holder locking stud; 33. ball-holder guide slot; 34. bracket locking nut; 35. bracket;

4. grating assembly;

40. grating fringe; 41. grating support; 42. grating frame; 43. grating mounting screw; 44. grating; 45. hinge shaft; 46. pull rod; 47. lug locking nut; 48. lug; 49. visually read scale;

5. guide mechanism;

51. guide-mechanism locking stud; 52. guide-mechanism guide sleeve; 53. guide-mechanism guide slot; 54. horizontal-rod locking nut; 55. horizontal rod; 56. pull-rod-guide-sleeve locking nut; 57. pull-rod guide sleeve;

6. support;

61. grating guide plate; 62. grating-guide-plate fixing screw; 63. support locking screw; 64. support guide sleeve; 65. support guide slot; 66. support base plate;

7. light sensor;

70. indicator; 71. light-sensor fixing screw; 72. light-sensor pressure-resistant cable; 73. light-sensor cable seal; 74. light-sensor pressure-resistant shell; 75. built-in grating reader; 76. built-in micro camera; 77. light-sensor fork rack; 78. light-sensor tightening screw; 79. light-sensor pressure-resistant transparent plate;

8. light source;

81. light-source fixing screw; 82. light-source pressure-resistant cable; 83. light-source cable seal; 84. light-source pressure-resistant shell; 85. built-in grating light source; 86. built-in shooting illumination light source; 87. light-source fork rack; 88. light-source tightening screw; 89. light-source pressure-resistant transparent plate;

9. high-pressure tank;

91. lower tank cap;

911. light-source cable outlet seal; 912. tank-body sealing ring; 915. light-sensor cable outlet seal;

92. tank body;

922. upper-tank-cap sealing ring;

93. upper tank cap; 94. lifting lug; 95. upper-tank-cap fixing bolt group; 96. tank-body fixing bolt group; 97. high-pressure-tank support leg; 98. tester mounting plate;

10. water channel port; and

20. safety valve port.

## DETAILED DESCRIPTION

Specific implementations of the present invention are described below with reference to the accompanying drawings.

A specific structure and functions of an apparatus for testing a mechanical property of a buoyancy material in an abyssal environment are as follows:

The apparatus mainly includes a rack 1, a spherical-cage apparatus 2, a ball holder 3, a grating assembly 4, a guide mechanism 5, a support 6, a light sensor 7, a light source 8, a high-pressure tank 9, a water channel port 10, and a safety valve port 20.

After mounting and debugging are completed, a simulated abyssal environment is formed by using a test medium injected into the high-pressure tank 9 through the water channel port 10. A pressure applied to the test medium may be converted into a corresponding work depth. A temperature of the test medium may simulate a corresponding work temperature. A density of the test medium may simulate a corresponding sea water density. In a test process, to prevent a serious accident of tank explosion caused by a high pressure, the safety valve port 20 for gas overflow and liquid overflow is disposed at a top of the high-pressure tank 9.

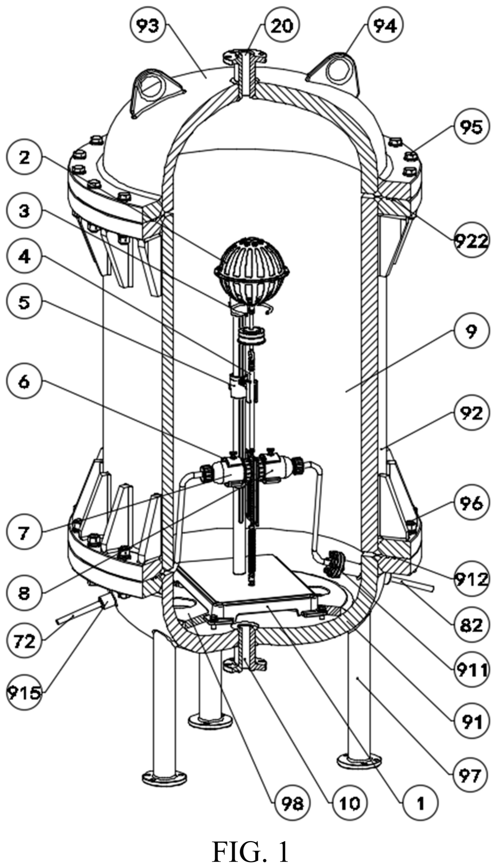

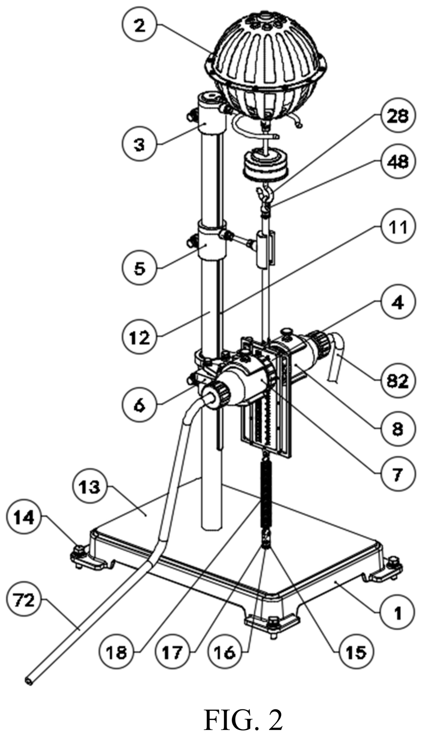

Refer to FIG. 1 and FIG. 2, the rack 1, the spherical-cage apparatus 2, the ball holder 3, the guide mechanism 5, the support 6, the light sensor 7, and the light source 8 may form a tester with an independent function, and the tester is debugged in a normal environment outside the high-pressure tank 9. After debugging is completed, the tester is mounted inside the high-pressure tank 9, and is fixed to a tester mounting plate 98 by using mounting screws 14.

Refer to FIG. 2, the rack 1 is a mounting basis structure of components related to the tester, and includes a guide key 11, a column 12, a base 13, and the mounting screws 14. The guide key 11 fits the column 12 during use, so that the ball holder 3, the grating assembly 4, the guide mechanism 5, and the support 6 can only move upward and downward during mounting and debugging, but do not rotate, thereby reducing difficulty in mounting and debugging of the ball holder 3, the grating assembly 4, the guide mechanism 5, and the support 6. A tension-spring anchor 16 is mounted to the base 13 through threaded connection. The tension-spring anchor 16 is fixed by using a tension-spring-anchor locking nut 15 after a height and an angle are completely adjusted. A tension-spring pin 17 is movably connected to a lower end of a metering tension spring 18.

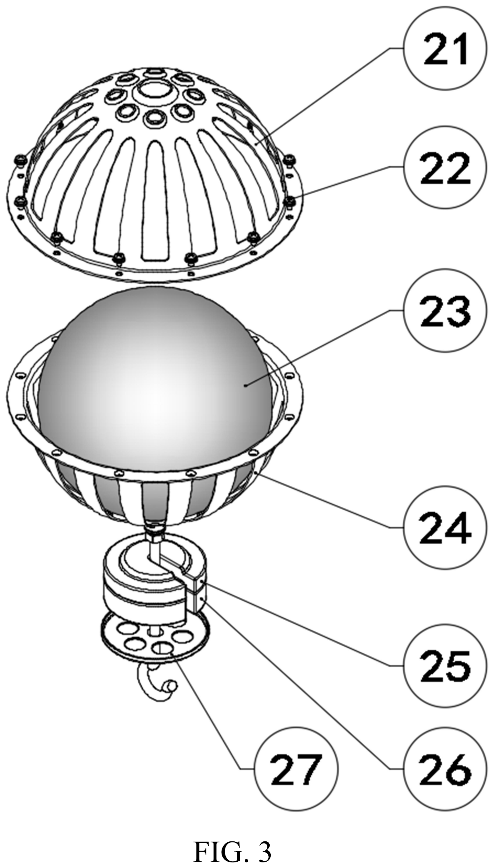

Refer to FIG. 2 and FIG. 3, the spherical-cage apparatus 2 includes a hollow-out upper spherical shell 21 and a hollow-out lower spherical shell 24. A spherical test piece 23 is placed into a spherical cage by using the upper spherical shell 21 and the lower spherical shell 24 in a buckling manner. Spherical-shell screws 22 implement assembly and disassembly of the upper spherical shell 21 and the lower spherical shell 24, to place and take out the spherical test piece 23. A radius of an inner surface of the spherical-cage apparatus 2 is greater than a radius of the spherical test piece 23, to ensure that no structural constraint is generated on the spherical test piece 23 in the test process, and ensure that the test medium is in full contact with an outer surface of the spherical test piece 23 without a blind spot. A hook 28 is disposed on the lower spherical shell 24. A weight tray 27 is fixed to the hook 28, and the weight tray 27 carries a weight A 25 and a weight B 26. The hook 28 hooks a lug 48, to implement movable connection to the guide mechanism 5, thereby facilitating assembly and disassembly of the spherical-cage apparatus 2. The spherical-cage apparatus 2 is configured to mount the spherical test piece 23. The weight A 25 and the weight B 26 are selected gravity blocks of fixed weights, and functions of the weight A 25 and the weight B 26 are to reduce a pull force of the metering tension spring 18, increase a separation degree of a test value of net buoyancy, and improve accuracy of measurement data.

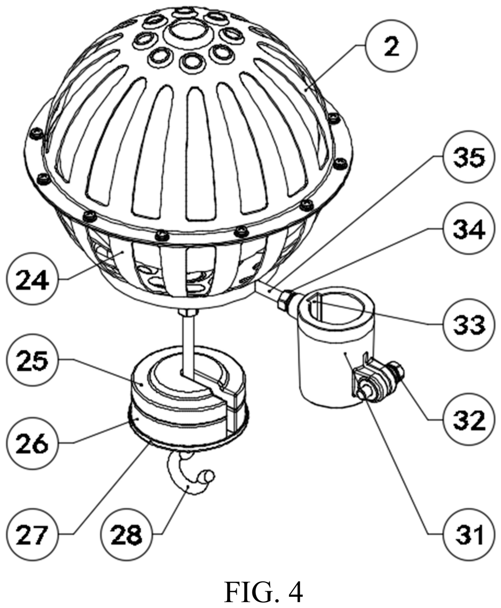

Refer to FIG. 2 and FIG. 4, the ball holder 3 includes a ball-holder guide sleeve 31, a ball-holder locking stud 32, a bracket locking nut 34, and a bracket 35. A function of the ball holder 3 is to hold the spherical-cage apparatus 2 before the spherical-cage apparatus 2 does not generate sufficient buoyancy and lengthens the metering tension spring 18, and complete positioning on the tester. The ball holder 3 is mounted to the column 12 by using the ball-holder guide sleeve 31 in a manner of slidable fitting with a small gap. A ball-holder guide slot 33 slidably fits the guide key 11, to limit rotation of the ball holder 3. After a height position of the ball holder 3 is adjusted, the ball-holder locking stud 32 is tightly locked, to fix the ball holder 3. The bracket 35 is mounted to the ball-holder guide sleeve 31 through threaded connection, and is fixed by using the bracket locking nut 34 after a position and a horizontal state of the bracket 35 are adjusted.

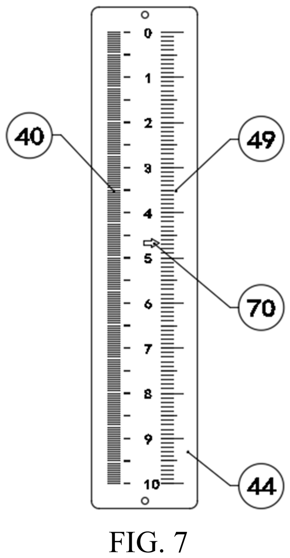

Refer to FIG. 2, FIG. 5, and FIG. 7, the guide mechanism 5 includes a guide-mechanism locking stud 51, a guide-mechanism guide sleeve 52, a horizontal rod 55, and a pull-rod guide sleeve 57. A function of the guide mechanism 5 is to enable, through slidable fitting with a small gap between the guide-mechanism guide sleeve 52 and a pull rod 46, the pull rod 46 to be flexibly movable upward and downward only in a plumb direction, thereby ensuring that the pull rod 46 pulls the grating assembly 4 to accurately move upward and downward in the plumb direction. Therefore, a built-in grating reader 75 can stably and reliably read grating fringes 40, and a built-in micro camera 76 can stably shoot and record an image of visually read scales 49. The guide mechanism 5 is mounted to the column 12 by using the guide-mechanism guide sleeve 52 in a manner of slidable fitting with a small gap. A guide-mechanism guide slot 53 slidably fits the guide key 11, to limit rotation of the guide mechanism 5. After a height position of the guide mechanism 5 is adjusted, the guide-mechanism locking stud 51 is tightly locked, to fix the guide mechanism 5. One end of the horizontal rod 55 is mounted to the guide-mechanism guide sleeve 52 through threaded connection, and is tightly locked by using a horizontal-rod locking nut 54. The other end of the horizontal rod 55 is mounted to the pull-rod guide sleeve 57 through threaded connection. After verticality of the pull-rod guide sleeve 57 and a distance between the pull-rod guide sleeve 57 and the column 12 are adjusted, a pull-rod-guide-sleeve locking nut 56 is used for locking and fixing.

Refer to FIG. 2, FIG. 5, and FIG. 7, the grating assembly 4 includes a grating support 41, a grating frame 42, grating mounting screws 43, a grating 44, the pull rod 46, and a lug 48. A function of the grating assembly 4 is to: when the spherical-cage apparatus 2 is submerged in liquid to generate buoyancy, provide lengthening information of the metering tension spring 18, and perform conversion on a lengthening amount of the metering tension spring 18, to calculate a buoyant force generated by the spherical test piece 23. The grating 44 is a glass plate with high transparency, and the grating fringes 40 and the visually read scales 49 are finely inscribed on a surface of the grating 44. After being embedded into the grating support 41, the grating 44 is covered by using the grating frame 42, and fixed by using the grating mounting screws 43. A hinge shaft 45 passes through the grating support 41 and the pull rod 46, to form a movable hinge. The lug 48 is mounted to an end portion of the pull rod 46 through threaded connection. After an extension amount of the lug 48 is adjusted, the lug 48 is tightly locked and fixed by using a lug locking nut 47.

Refer to FIG. 2, FIG. 5, and FIG. 6, the support 6 includes a grating guide plate 61, a support locking screw 63, a support guide sleeve 64, and a support base plate 66. A function of the support 6 is to provide mounting support for the light sensor 7 and the light source 8. The grating guide plate 61 fits the grating support 41 to limit rotation of the grating assembly 4, and ensure that light emitted by a built-in grating light source 85 vertically illuminates on the grating 44. After a position of the grating guide plate 61 is adjusted, the grating guide plate 61 is fixed by using a grating-guide-plate fixing screw 62. The support 6 is mounted to the column 12 by using the support guide sleeve 64 in a manner of slidable fitting with a small gap. A support guide slot 65 slidably fits the guide key 11, to limit rotation of the support 6. After a height position of the support 6 is adjusted, the support locking screw 63 is tightly locked, to fix the support 6.

Refer to FIG. 2, FIG. 5, FIG. 6, FIG. 7, and FIG. 8, the light sensor 7 includes a light-sensor pressure-resistant cable 72, a light-sensor cable seal 73, a light-sensor pressure-resistant shell 74, the built-in grating reader 75, the built-in micro camera 76, and a light-sensor fork rack 77. In a test, the light-sensor pressure-resistant shell 74 protects the built-in grating reader 75 and the built-in micro camera 76 from being pressed by water, and the light-sensor cable seal 73 prevents high-pressure water from penetrating into the light-sensor pressure-resistant shell 74 through a lead-out portion of the light-sensor pressure-resistant cable 72. A light-sensor pressure-resistant transparent plate 79 is disposed at an end portion of the light-sensor pressure-resistant shell 74 facing the grating 44, and an indicator 70 is inscribed on the light-sensor pressure-resistant transparent plate 79. The light-sensor pressure-resistant shell 74 is inserted into the light-sensor fork rack 77, and then is fixed by using a light-sensor tightening screw 78. The light sensor 7 is mounted to the support 6, and is fixed by using a light-sensor fixing screw 71.

Refer to FIG. 2, FIG. 5, and FIG. 6, the light source 8 includes a light-source pressure-resistant cable 82, a light-source cable seal 83, a light-source pressure-resistant shell 84, the built-in grating light source 85, a built-in shooting illumination light source 86, and a light-source fork rack 87. In a test, the light-source pressure-resistant shell 84 protects the built-in grating light source 85 and the built-in shooting illumination light source 86 from being pressed by water, and the light-source cable seal 83 prevents high-pressure water from penetrating into the light-source pressure-resistant shell 84 through a lead-out portion of the light-source pressure-resistant cable 82. A light-source pressure-resistant transparent plate 89 is disposed at an end portion of the light-source pressure-resistant shell 84 facing the grating 44. The light-source pressure-resistant shell 84 is inserted into the light-source fork rack 87, and then is fixed by using a light-source tightening screw 88. The light source 8 is mounted to the support 6, and is fixed by using a light-source fixing screw 81.

Refer to FIG. 1, the high-pressure tank 9 includes a lower tank cap 91, a tank body 92, and an upper tank cap 93. A tank-body sealing ring 912 provides sealing for a combination of the lower tank cap 91 and the tank body 92. An upper-tank-cap sealing ring 922 provides sealing for a combination of the tank body 92 and the upper tank cap 93. The water channel port 10 is disposed at the lower tank cap 91. A light-source cable outlet seal 911 is disposed to provide sealing for leading the light-source pressure-resistant cable 82 to the outside of the high-pressure tank 9. A light-sensor cable outlet seal 915 is disposed to provide sealing for leading the light-sensor pressure-resistant cable 72 to the outside of the high-pressure tank 9. High-pressure-tank support legs 97 are disposed to fix and place the high-pressure tank 9. Lifting lugs 94 are specified force-bearing points when the tank body 92 and the upper tank cap 93 are assembled or disassembled, to ensure balance and safety during work. An upper-tank-cap fixing bolt group 95 implements assembly and disassembly of the upper tank cap 93. A tank-body fixing bolt group 96 implements assembly and disassembly of the tank body 92. A tester mounting plate 98 is a support body of the tester.

Refer to FIG. 1, FIG. 2, FIG. 5, FIG. 7, and FIG. 8, a work principle of a photoelectric reader is that the built-in grating light source 85 projects the grating fringes 40 on the grating 44 to the built-in grating reader 75. An electrical signal is generated through a photoelectric effect. The electrical signal is transmitted to a signal processor outside the high-pressure tank 9 by using the light-sensor pressure-resistant cable 72. The signal processor processes the electrical signal and converts the electrical signal into height information of the grating 44. The height information is sent to a computer, so that a length of the metering tension spring 18 when a force is applied to the metering tension spring 18 can be calculated and displayed. The built-in micro camera 76 shoots and records an image in which the visually read scale 49 overlaps the indicator 70, to simulate visual estimation, so as to intuitively determine the height information of the grating 44 Although accuracy of the measured pull force of the metering tension spring 18 is low, the pull force is intuitive. The two manners are simultaneously used and mutually verified, to determine whether a test situation in a pressure container is normal.

In an actual test process:

(1) Test preparation stage:

a. Measurement and calculation of the spherical test piece 23:

As shown in FIG. 3, a radius R of the spherical test piece 23 is measured in a laboratory environmental condition, and a volume is calculated by using a (formula 1):

$$V = \pi \cdot R^3 \qquad \text{(formula 1)}$$

In the formula:

V is the volume of the spherical test piece 23, in cubic millimeter ($mm^3$). R is a radius of a test sample, in millimeter (mm). $\pi$ is Pi, and is evaluated to 3.14159.

$$F2 = \rho g V \qquad \text{(formula 2)}$$

In the formula:

V is the volume of the spherical test piece 23, in cubic millimeter ($mm^3$). $\rho$ is a liquid density, in kilogram/cube meter ($kg/m^3$). g represents a constant, and g=9.8 N/kg.

b. Measurement and calculation of the metering tension spring 18:

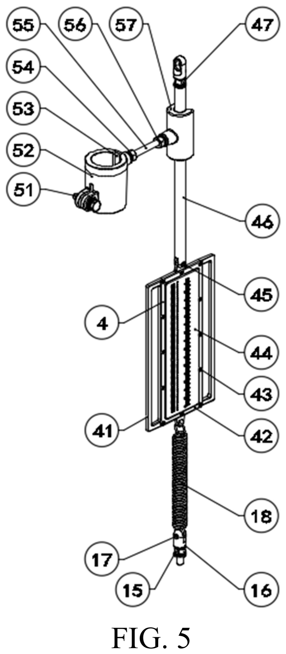

As shown in FIG. 2 and FIG. 5, the metering tension spring 18 is a force metering spring. The pull force generated by the metering tension spring 18 is linearly related to an elongation and deformation amount of the metering tension spring 18. An original length of the metering tension spring 18 when no force is applied is measured based on technical data of the metering tension spring 18, and a rated pull force generated when the metering tension spring 18 is in a rated range length is measured. Rigidity of the metering tension spring 18 is calculated by using a (formula 3).

$$k = \frac{F}{l_1 - l_0} \qquad \text{(formula 3)}$$

In the formula:

k is spring rigidity, in newton/millimeter (N/mm). F is the rated pull force of the metering tension spring 18, in newton (N). $l_1$ is the length of the metering tension spring 18 under the rated pull force, in millimeter (mm). $l_0$ is the original length of the metering tension spring 18 when no force is applied, in millimeter (mm).

c. Determine weights of tester components in an atmospheric environment:

Refer to FIG. 3 and FIG. 5, weights of the following listed components affect accuracy of a test result, and the weights of the components cannot be ignored. The tester components include the upper spherical shell 21, the spherical-shell screws 22, the lower spherical shell 24, the weight tray 27, and the hook 28 except the spherical test piece 23 in the spherical-cage apparatus 2, and the grating support 41, the grating frame 42, the grating mounting screws 43, the grating 44, the hinge shaft 45, the pull rod 46, the lug locking nut 47, the lug 48, and the metering tension spring 18 of the grating assembly 4. The components are collectively referred to as tester components. In the test preparation stage, in an experimental environment, a total weight of the tester components is determined through weighting.

d. Determine a total weight of the tester components after the tester components enter water:

Refer to FIG. 3 and FIG. 5, the tester components also generate buoyancy in water, and the buoyancy generated by the tester components cannot be ignored either; otherwise, the accuracy of the test result is affected. The tester components including the upper spherical shell 21, the spherical-shell screws 22, the lower spherical shell 24, the weight tray 27, and the hook 28 except the spherical test piece 23 in the spherical-cage apparatus 2, and the grating support 41, the grating frame 42, the grating mounting screws 43, the grating 44, the hinge shaft 45, the pull rod 46, the lug locking nut 47, the lug 48, and the metering tension spring 18 of the grating assembly 4 are combined together. In a laboratory atmospheric environment, the weight of the tester components when the tester components are submerged in water is determined through weighting.

e. Determine weights of the weight A 25 and the weight B 26:

According to the mechanical static balance principle, a combined calculation weight of the weight A 25 and the weight B 26 is calculated by using a (formula 4).

$$G_{AB} = F_2 - G_2 - G_1 - \eta \cdot F_{pull} \quad (formula\ 4)$$

In the formula:

GAB is the calculated total weight of the weight A 25 and the weight B 26. F2 is theoretical buoyancy of the spherical test piece 23. G2 is a weight of the spherical test piece 23. G1 is the weight of the tester components. $\eta$ is a weight selection coefficient, and ranges from 0.75 to 0.95. $F_{pull}$ is the rated pull force of the metering tension spring 18.

According to a calculation result of the (formula 4), standard weights should be selected as the weight A 25 and the weight B 26. A difference between the combined calculation weight of the weight A 25 and the weight B 26 and an actually selected weight should be less than 5% to 25% of the rated pull force of the metering tension spring 18. If a sum of gravity values of the two weights cannot satisfy the condition, three or more weights may be used.

f. Determine a total weight of the weight A 25 and the weight B 26 after the weight A 25 and the weight B 26 enter water: The weight A 25 and the weight B 26 also generate buoyancy after entering water. To ensure the accuracy of the test result, the buoyancy of the weight A 25 and the weight B 26 cannot be ignored. The weight A 25 and the weight B 26 are combined together. The weight of the weight A 25 and the weight B 26 that are submerged in water after the weight A 25 and the weight B 26 enter water is determined through weighting in the laboratory atmospheric environment.

Data determined and results calculated in the test preparation stage are uniformly recorded in Table 1 and Table 2.

Table 1 Table for recording parameters in the test preparation stage

| Number | Project name | Code | Measured value | | Remark |
| --- | --- | --- | --- | --- | --- |
| | | | Recorded value | Unit | |
| 1 | Weight of a test sample 2 | $G_2$ | | Newton (N) | Actually measured value |
| 2 | Theoretical calculation buoyancy of the test sample 2 | $F_2$ | | Newton (N) | Calculated value (Archimedes principle) |
| 3 | Weight of tester components | $G_1$ | | Newton (N) | Total weight of a spherical cage 1, a pull rod 5, a grating 6, and a metering tension spring 9 |
| 4 | Total weight of weights | $G_{AB}$ | | Newton (N) | Actually selected value |
| 5 | Rated range length of the metering tension spring 9 | $l_r$ | | Millimeter (mm) | Design value |
| 6 | Original length of the metering tension spring 9 | $l_0$ | | Millimeter (mm) | Actually measured value |

(continued)

| Number | Project name | Code | Measured value | | Remark |
|---|---|---|---|---|---|
| | | | Recorded value | Unit | |
| 7 | Rated pull force of the metering tension spring 9 | $F_{pull}$ | | Newton (N) | Pull force measured when the metering tension spring 9 is in the rated range length ($l_r$) |
| 8 | Rated rigidity of the metering tension spring 9 | k | | Newton/millimeter (N/mm) | Calculated by using the formula 2 |

Table 2 Table for recording parameters in an entering-water test stage

| Number | Project name | | Code | Measured value | | Remark |
|---|---|---|---|---|---|---|
| | | | | Recorded value | Unit | |
| 1 | Weight of the tester components | | $G_1$ | | Newton (N) | Total weight of the spherical cage 1, the pull rod 5, the grating 6, and the metering tension spring 9 after the spherical cage 1, the pull rod 5, the grating 6, and the metering tension spring 9 enter water |
| 2 | Total weight of weights | | $G_{AB}$ | | Newton (N) | Total weight of a weight A 3 and a weight B 4 after the weight A 3 and the weight B 4 enter water |
| 3 | Length of the metering tension spring 9 in an entering-water stage | | $l_1$ | | Millimeter (mm) | Measurement in a normal pressure environment |
| 4 | Pull force of the metering tension spring 9 in the entering-water stage | | $F'_{pull}$ | | Newton (N) | Calculated by using the formula 2 |
| 5 | Buoyancy actually obtained by the test sample 2 | | $F'_2$ | | Newton (N) | Calculated by using the formula 5 |
| 6 | Net buoyancy provided by the test sample 2 | | $F''_2$ | | Newton (N) | Calculated by using the formula 6 |

(2) Assembly and debugging stage:

Refer to FIG. 3, when it is determined through check that a surface of the spherical test piece 23 has no defect such as a crack or a recess, according to a requirement shown in FIG. 3, the spherical test piece 23 is mounted into the lower spherical shell 24, the upper spherical shell 21 is closed, the spherical-shell screw 22 is tightly locked, and the weight A 25 and the weight B 26 are placed on the weight tray 27, to complete assembling the spherical-cage apparatus 2.

Refer to FIG. 2, in a laboratory environment, as shown in FIG. 2, the tension-spring anchor 16, the tension-spring pin 17, the metering tension spring 18, the spherical-cage apparatus 2, the ball holder 3, the grating assembly 4, the guide mechanism 5, the support 6, the light sensor 7, and the light source 8 are mounted on the rack 1.

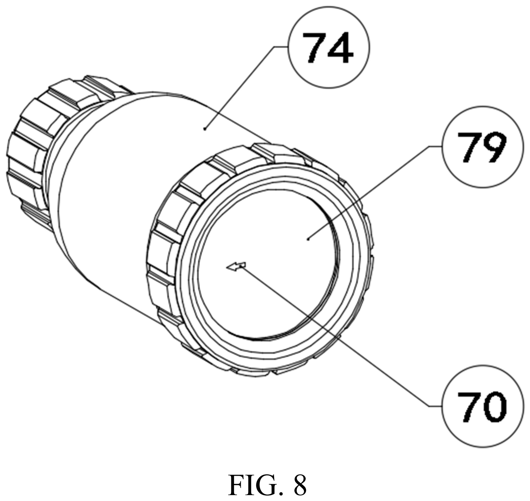

Refer to FIG. 2 and FIG. 8, as shown in FIG. 2, a mounted and debugged tester is mounted on the tester mounting plate 98 and fixed by using the mounting screws 14, and it is determined that the column 12 on the rack 1 is in a plumb state.

Refer to FIG. 2, FIG. 4, FIG. 5, FIG. 6, FIG. 7, and FIG. 8, heights and positions of the ball holder 3, the grating assembly 4, the guide mechanism 5, the support 6, the light sensor 7, and the light source 8 are adjusted. It is determined that the pull rod 46 is in the plumb state, and is parallel to the column 12. It is determined that the pull rod 46 well fits the pull-rod guide sleeve 57, and the pull rod 46 can flexibly move upward and downward within the pull-rod guide sleeve 57 without freezing and lagging. It is determined that the ball holder 3 can stably hold the spherical-cage apparatus 2. After powering on, it is checked and determined that the built-in grating reader 75 in the light sensor 7 can obtain measurement data in a full range, and the built-in micro camera 76 can clearly obtain image information of the visually read scales 49.

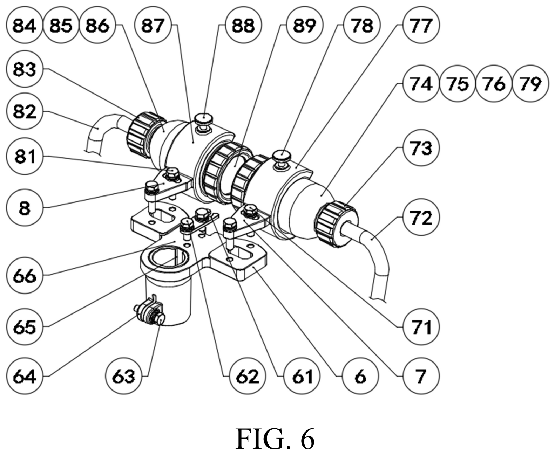

Refer to FIG. 6 and FIG. 8, zero-position calibration of the tester is theoretically performed when the metering tension spring 18 does not bear a force. During actual operation, zero-position calibration is performed when the metering tension spring 18 is maintained in an original length $l_0$, a height position of the support 6 is calibrated, it is determined that the indicator 70 points to a start position (a position of a reading "0") of the visually read scales 49, and then a display value measured by the built-in grating reader 75 is set to the reading "0".

Refer to FIG. 8, after zero-position calibration of the tester is performed, a lead-out part of the light-source pressure-resistant cable 82 is sealed by using the light-source cable outlet seal 911, and a lead-out part of the light-sensor pressure-resistant cable 72 is sealed by using the light-sensor cable outlet seal 915.

(3) Entering-water test stage:

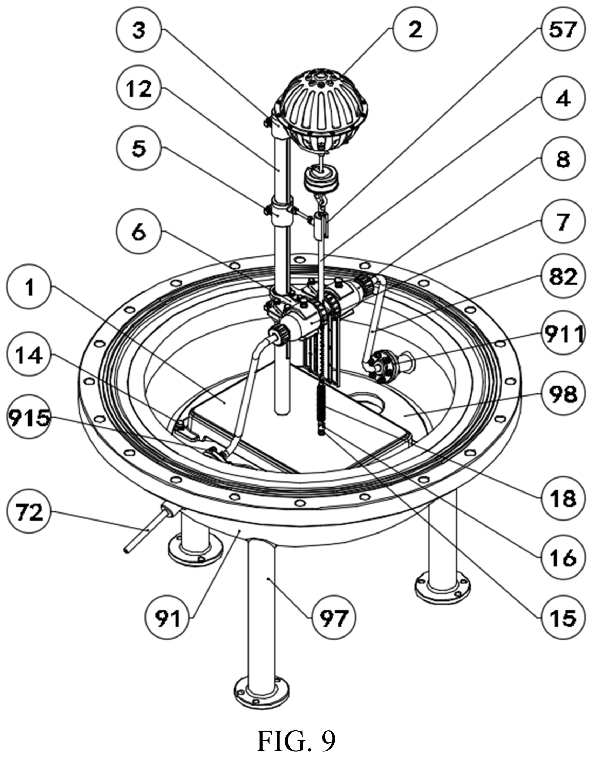

Refer to FIG. 9, after assembly and debugging are completed, the tank body 92 is mounted above the lower tank cap 91, sealed by using the tank-body sealing ring 912, and tightly fixed by using the tank-body fixing bolt group 96.

Refer to FIG. 1 and FIG. 9, test water is injected from the water channel port 10 to the high-pressure tank 9 on which no upper tank cap 93 is mounted. Whether the spherical-cage apparatus can smoothly float is visually determined during water injection. Whether a pull force displayed on a screen of a computer increases and whether an image shot by the built-in micro camera 76 indicates that a value indicated by the indicator 70 is synchronous with the pull force displayed on the screen are monitored. Based on this, whether a system abnormally works is determined.

Refer to FIG. 9, water injection is stopped when a water level rises to a height position at which the spherical-cage apparatus 2 is submerged. Whether the spherical-cage apparatus 2 leaves the ball holder 3 after the spherical-cage apparatus 2 floats upward is visually measured. If the spherical-cage apparatus 2 does not leave the ball holder 3 or a leaving height is insufficient, it is estimated that a loss of a floating force is caused after the spherical test piece 23 absorbs water, and the spherical-cage apparatus 2 falls on the ball holder 3. In this case, a height of the ball holder 3 is adjusted again, and the ball holder 3 is fixed at a reliable height, to ensure that the spherical-cage apparatus 2 does not sit on the ball holder 3 in a pressurization test.

Refer to FIG. 6 and FIG. 9, water injection is stopped. After a water surface is still, the built-in grating reader 75 accurately reads an elongation amount of the metering tension spring 18, and the built-in micro camera 76 roughly reads the elongation amount of the spring 18.

According to the read elongation amount of the metering tension spring, the pull force generated by the metering tension spring 18 is calculated by using a (formula 5), and is represented by $F'_{pull}$.

$$F'_{pull} = k \cdot \Delta L \qquad \text{(formula 5)}$$

In the formula 5:

$F'_{pull}$ is the pull force generated when the metering tension spring 18 enters water, in newton (N). k is rigidity of the metering tension spring 18, in newton/millimeter (N/mm). $\Delta L$ is the elongation amount of the metering tension spring, in millimeter (mm).

According to the mechanical static balance principle, buoyancy actually generated and net buoyancy provided by the spherical test piece 23 are calculated by using the data obtained through measurement, and are respectively calculated by using a formula 6 and a formula 7.

$$F'_2 = F'_{pull} + G_1 + G_{AB} + G_2 \qquad \text{(formula 6)}$$

$$F''_2 = F'_{pull} + G_1 + G_{AB} \qquad \text{(formula 7)}$$

In the formula 6 and the formula 7:

$F'_2$ is the buoyancy actually obtained by the spherical test piece 23. $F''_2$ is the net buoyancy provided by the spherical test piece 23. F' is the pull force generated when the metering tension spring 18 enters water. $G_1$ is an actually measured weight after the tester components enter water. $G_{AB}$ is the total weight after the weight A 25 and the weight B 26 enter water. $G_2$ is an actually measured weight of the test sample 2.

Data determined and data calculated in the entering-water test stage are uniformly recorded in Table 2.

(4) Simulation test stage:

Refer to FIG. 1 and FIG. 5, after work of the entering-water test stage is completed, the upper tank cap 93 is mounted above the tank body 92, sealed by using the upper-tank-cap sealing ring 922, and tightly fixed by using the upper-tank-cap fixing bolt group 95. Test water is injected into the complete high-pressure tank 9 again through the water channel port 10 until an inner cavity of the high-pressure tank 9 is fully filled. An inner sea water density of the high-pressure tank 9, regulating an inner sea water temperature of the high-pressure tank 9, and increasing an inner sea water pressure of the high-pressure tank 9 are adjusted step by step for factors affecting the mechanical property of the buoyancy material: a sea water density, a sea water temperature, and a work depth, testing is performed step by step, and a buoyancy change and a change process of the spherical test piece 23 are recorded.

A test item and a test process in a test performed for an impact of the sea water density on buoyancy are the same as a test item and a test process in the entering-water test stage. Recorded and calculated data is recorded in Table 3.

Table 3 Table for recording parameters in a simulation work test stage

| Number | Project name | Code | Measured value | | Remark |
|---|---|---|---|---|---|
| | | | Recorded value | Unit | |
| 1 | Weight of the tester components | $G_1$ | | Newton (N) | Total weight of the spherical cage 1, the pull rod 5, the grating 6, and the metering tension spring 9 after the spherical cage 1, the pull rod 5, the grating 6, and the metering tension spring 9 enter water |
| 2 | Total weight of weights | $G_{AB}$ | | Newton (N) | Total weight of a weight A 3 and a weight B 4 after the weight A 3 and the weight B 4 enter water |
| 3 | Length of the metering tension spring 9 in the simulation work test stage | $l_1$ | | Millimeter (mm) | Measurement in a pressure-resistant environment |
| 4 | Pull force of the metering tension spring 9 in the simulation work test stage | $F'_{pull}$ | | Newton (N) | Calculated by using the formula 2 |
| 5 | Buoyancy actually obtained by the test sample 2 | $F'_2$ | | Newton (N) | Calculated by using the formula 5 |
| 6 | Net buoyancy provided by the test sample 2 | $F''_2$ | | Newton (N) | Calculated by using the formula 6 |

In a test performed for an impact of a sea water depth on the buoyancy, when the sea water temperature maintains unchanged, a related pressurization/depressurization procedure is performed on a test medium, and the buoyancy ( $F'_2$ ) actually generated by the spherical test piece 23, the net buoyancy ( $F''_2$ ) provided by the spherical test piece 23, and a change process of the spherical test piece 23 are observed and recorded.

In a test performed for an impact of the sea water temperature on the buoyancy, when the work depth maintains unchanged, a temperature of the test medium is adjusted, and the buoyancy ( $F_2'$ ) actually generated by the spherical test piece 23, the net buoyancy ( $F_2''$ ) provided by the spherical test piece 23, and the change process of the spherical test piece 23 are observed and recorded.

Data determined and data calculated in the simulation work test stage are uniformly recorded in Table 3.

A large amount of data needs to be recorded in a test process, processing and calculation are performed by using a computer, to obtain a test result, and the test result is intuitively displayed by using a graph, a table, and the like.

The foregoing descriptions are intended to explain the present invention, but not to limit the present invention. For the scope of the present invention, refer to the claims. Any form of modification may be made within the protection scope of the present invention.

**Claims**

1. An apparatus for testing a mechanical property of a buoyancy material in an abyssal environment, wherein the apparatus comprises a split-type high-pressure tank (9), an independent tester is fixedly mounted inside the high-pressure tank (9), a specific structure of the tester comprises a rack (1) fixed inside the high-pressure tank (9) by using mounting screws (14), a base (13) is disposed on an upper surface of the rack (1), a column (12) is vertically mounted to the base (13), a guide key (11) is mounted to the column (12), a spherical-cage apparatus (2) is mounted at a top of the column (12) by using a ball holder (3), a spherical test piece (23) is disposed inside the spherical-cage apparatus (2), a bottom of the spherical-cage apparatus (2) is connected to a grating assembly (4) by using a hook (28), a guide mechanism (5) and a support (6) are respectively mounted at a middle part and a lower part of the column (12), a light sensor (7) and a light source (8) are respectively disposed on two sides of the grating assembly (4), and a bottom of the grating assembly (4) is connected to the base (13) by using a metering tension spring (18); and a safety valve port (20) is disposed on a top surface of the high-pressure tank (9), and a water channel port (10) is disposed at a bottom of the high-pressure tank (9).

2. The apparatus for testing the mechanical property of the buoyancy material in the abyssal environment according to claim 1, wherein a structure of the spherical-cage apparatus (2) comprises an upper spherical shell (21) and a lower spherical shell (24) that correspond to each other upward and downward, the upper spherical shell (21) and the lower spherical shell (24) each are of a hollow-out structure, the upper spherical shell (21) and the lower spherical shell (24) are tightly locked by using spherical-shell screws (22), space for placing the spherical test piece (23) is formed inside, the hook (28) is disposed at a middle position of a bottom surface of the lower spherical shell (24), a weight tray (27) is fixed to the hook (28), and the weight tray (27) carries a weight A (25) and a weight B (26).

3. The apparatus for testing the mechanical property of the buoyancy material in the abyssal environment according to claim 2, wherein a radius of an inner surface of the spherical-cage apparatus (2) is greater than a radius of the spherical test piece (23).

4. The apparatus for testing the mechanical property of the buoyancy material in the abyssal environment according to claim 1, wherein the ball holder (3) comprises a ball-holder guide sleeve (31) sleeved on the column (12), a ball-holder guide slot (33) is provided on an inner wall surface of the ball-holder guide sleeve (31), the ball-holder guide slot (33) slidably fits the guide key (11), a ball-holder locking stud (32) is mounted on an outer wall surface of the ball-holder guide slot (33), the outer wall surface of the ball-holder guide slot (33) on a side opposite to the ball-holder locking stud (32) is connected to a bracket (35) by using a bracket locking nut (34), and the bracket (35) is of an arc structure.

5. The apparatus for testing the mechanical property of the buoyancy material in the abyssal environment according to claim 1, wherein a structure of the guide mechanism (5) comprises a guide-mechanism guide sleeve (52) mounted to fit the column (12), a guide-mechanism guide slot (53) fitting the guide key (11) is disposed inside the guide-mechanism guide sleeve (52), a guide-mechanism locking stud (51) is mounted on an outer wall surface of the guide-mechanism guide sleeve (52), the outer wall surface of the guide-mechanism guide sleeve (52) on a side opposite to the guide-mechanism locking stud (51) is connected to a pull-rod guide sleeve (57) by using a horizontal rod (55), and a section of the pull-rod guide sleeve (57) is of a semicircular structure.

6. The apparatus for testing the mechanical property of the buoyancy material in the abyssal environment according to claim 1, wherein a structure of the grating assembly (4) comprises a grating support (41), a grating (44) is mounted to the grating support (41) by using a grating frame (42), the grating (44) is a glass plate with high transparency, and grating fringes (40) and visually read scales (49) are finely inscribed on a surface of the grating (44).

7. The apparatus for testing the mechanical property of the buoyancy material in the abyssal environment according to claim 1, wherein a structure of the high-pressure tank (9) comprises a tank body (92), an upper tank cap (93) is mounted by using a sealing ring to fit an upper part of the tank body (92), a lower tank cap (91) is mounted by using a sealing ring to fit a lower part of the tank body (92), and the water channel port (10) is disposed at the lower tank cap (91); a light-source cable outlet seal (911) is disposed to provide sealing for leading a light-source pressure-resistant cable (82) to the outside of the high-pressure tank (9); a light-sensor cable outlet seal (915) is disposed to provide sealing for leading a light-sensor pressure-resistant cable (72) to the outside of the high-pressure tank (9); high-pressure-tank support legs (97) are disposed to fix the high-pressure tank (9); lifting lugs (94) are specified force-bearing points when the tank body (92) and the upper tank cap (93) are assembled or disassembled; an upper-tank-cap fixing bolt group (95) implements assembly and disassembly of the upper tank cap (93); and a tank-body fixing bolt group (96) implements assembly and disassembly of the tank body (92), and a tester mounting plate (98) is a support body of the tester.

8. A test method of an apparatus for testing a mechanical property of a buoyancy material in an abyssal environment, wherein the method comprises the following operation steps:

S1. test preparation work:
preparing a spherical test piece (23), performing measurement and calculation on the spherical test piece (23), performing measurement and calculation by using a metering tension spring (18), determining weights of tester components in an atmospheric environment, determining a total weight of the tester components after the tester components enter water, determining weights of a weight A (25) and a weight B (26), and determining a total weight of the weight A (25) and the weight B (26) after the weight A (25) and the weight B (26) enter water; and recording all data and calculation results in a test preparation stage;
S2. assembly and debugging stage:

when it is determined through check that a surface of the spherical test piece (23) has no defect such as a crack or a recess, mounting the spherical test piece (23) into a lower spherical shell (24), closing an upper spherical shell (21), tightly locking a spherical-shell screw (22), and placing the weight A (25) and the weight B (26) on a weight tray (27), to complete assembling a spherical-cage apparatus (2);
in a laboratory environment, mounting a tension-spring anchor (16), a tension-spring pin (17), the metering tension spring (18), the spherical-cage apparatus (2), a ball holder (3), a grating assembly (4), a guide mechanism (5), a support (6), a light sensor (7), and a light source (8) on a rack (1);
mounting a mounted and debugged tester on a tester mounting plate (98), fixing the tester by using mounting screws (14), and determining that a column (12) on the rack (1) is in a plumb state;
adjusting heights and positions of the ball holder (3), the grating assembly (4), the guide mechanism (5), the support (6), the light sensor (7), and the light source (8); determining that a pull rod (46) is in the plumb state, and is parallel to the column (12); determining that the pull rod (46) well fits a pull-rod guide sleeve (57), and the pull rod (46) can flexibly move upward and downward within the pull-rod guide sleeve (57) without freezing and lagging; determining that the ball holder (3) can stably hold the spherical-cage apparatus (2); and powering on to check and determine that a built-in grating reader (75) in the light sensor (7) can obtain measurement data in a full range, and a built-in micro camera (76) can clearly obtain image information of visually read scales (49), wherein
zero-position calibration of the tester is theoretically performed when the metering tension spring (18) does not bear a force, and during actual operation, zero-position calibration is performed when the metering tension spring (18) is maintained in an original length $l_0$, a height position of the support (6) is calibrated, it is determined that an indicator (70) points to a start position of the visually read scales (49), and then a display value measured by the built-in grating reader (75) is set to a reading "0"; and
after zero-position calibration of the tester is performed, sealing a lead-out part of a light-source pressure-resistant cable (82) by using a light-source cable outlet seal (911), and sealing a lead-out part of a light-sensor pressure-resistant cable (72) by using a light-sensor cable outlet seal (915);

S3. entering-water test stage:

after assembly and debugging are completed, mounting a tank body (92) above a lower tank cap (91), sealing the tank body (92) by using a tank-body sealing ring (912), and tightly fixing the tank body (92) by using a tank-body fixing bolt group (96);
injecting test water from a water channel port (10) to a high-pressure tank (9) on which no upper tank cap (93) is mounted, visually determining whether the spherical-cage apparatus can smoothly float during water injection, and monitoring whether a pull force displayed on a screen of a computer increases and whether an image shot by the built-in micro camera (76) indicates that a value indicated by the indicator (70) is synchronous with the pull force displayed on the screen;

stopping water injection when a water level rises to a height position at which the spherical-cage apparatus (2) is submerged, visually measuring whether the spherical-cage apparatus (2) leaves the ball holder (3) after the spherical-cage apparatus (2) floats upward, and if the spherical-cage apparatus (2) does not leave the ball holder (3) or a leaving height is insufficient, and it is estimated that a loss of a floating force is caused after the spherical test piece (23) absorbs water, and the spherical-cage apparatus (2) falls on the ball holder (3), adjusting a height of the ball holder (3) again, and fixing the ball holder (3) at a reliable height, to ensure that the spherical-cage apparatus (2) does not sit on the ball holder (3) in a pressurization test; and

stopping water injection, and after a water surface is still, accurately reading an elongation amount of the metering tension spring (18) by using the built-in grating reader (75), and roughly reading the elongation amount of the spring (18) by using the built-in micro camera (76);

S4. simulation test stage:

mounting the upper tank cap (93) above the tank body (92), sealing the upper tank cap by using an upper-tank-cap sealing ring (922), tightly fixing the upper tank cap (93) by using an upper-tank-cap fixing bolt group (95), and injecting test water into the complete high-pressure tank (9) again through the water channel port (10) until an inner cavity of the high-pressure tank (9) is fully filled; and adjusting an inner sea water density of the high-pressure tank (9), regulating an inner sea water temperature of the high-pressure tank (9), and increasing an inner sea water pressure of the high-pressure tank (9) step by step for factors affecting the mechanical property of the buoyancy material: a sea water density, a sea water temperature, and a work depth, performing testing step by step, and recording a buoyancy change and a change process of the spherical test piece (23), wherein

a test item and a test process in a test performed for an impact of the sea water density on buoyancy are the same as a test item and a test process in the entering-water test stage; and

S5:

in a test performed for an impact of a sea water depth on the buoyancy, when the sea water temperature maintains unchanged, performing a related pressurization or depressurization procedure on a test medium, and observing and recording buoyancy actually generated by the spherical test piece (23), net buoyancy provided by the spherical test piece (23), and a change process of the spherical test piece;

in a test performed for an impact of the sea water temperature on the buoyancy, when the work depth maintains unchanged, adjusting a temperature of the test medium, and observing and recording the buoyancy actually generated by the spherical test piece (23), the net buoyancy provided by the spherical test piece (23), and the change process of the spherical test piece;

uniformly recording, in a table, data determined and data calculated in a simulation work test stage; and

a large amount of data needs to be recorded in a test process, performing processing and calculation by using a computer, to obtain a test result, and intuitively displaying the test result by using a graph, a table, and the like.

FIG. 1

FIG. 2

FIG. 3

FIG. 4

FIG. 5

FIG. 6

FIG. 7

FIG. 8

FIG. 9

FIG. 10

# EP 4 711 741 A1

## INTERNATIONAL SEARCH REPORT

| | International application No. |
|---|---|
| | **PCT/CN2025/094432** |

**A. CLASSIFICATION OF SUBJECT MATTER**

G01N3/10(2006.01)i; G01L1/00(2006.01)i

According to International Patent Classification (IPC) or to both national classification and IPC

**B. FIELDS SEARCHED**

Minimum documentation searched (classification system followed by classification symbols)

IPC: G01N3/-、G01L1/-

Documentation searched other than minimum documentation to the extent that such documents are included in the fields searched

Electronic data base consulted during the international search (name of data base and, where practicable, search terms used)

CNTXT, ENTXT, ENTXTC, VEN, WPABS, CNKI: 中国船舶科学研究中心, 王瑶, 深海 or 深水, 高压, 浮力, 球, 罐 or 釜, 光栅, 弹簧 or 拉簧, 导向, deep sea, buoyanc+, tank+, high? pressure, ball+ 2d cag+, grating+, spring+

**C. DOCUMENTS CONSIDERED TO BE RELEVANT**

| Category* | Citation of document, with indication, where appropriate, of the relevant passages | Relevant to claim No. |
|---|---|---|
| PX | CN 118624397 A (CHINA SHIP SCIENTIFIC RESEARCH CENTER) 10 September 2024 (2024-09-10) <br> description, pages 2-4 | 1-8 |
| A | CN 109855971 A (710TH RESEARCH INSTITUTE OF CHINA SHIPBUILDING INDUSTRY CORP.) 07 June 2019 (2019-06-07) <br> entire document | 1-8 |
| A | CN 103926099 A (702ND RESEARCH INSTITUTE OF CHINA SHIPBUILDING INDUSTRY CORP.) 16 July 2014 (2014-07-16) <br> entire document | 1-8 |
| A | CN 106323789 A (HUAZHONG UNIVERSITY OF SCIENCE AND TECHNOLOGY) 11 January 2017 (2017-01-11) <br> entire document | 1-8 |
| A | CN 115931614 A (725TH RESEARCH INSTITUTE OF CHINA SHIPBUILDING INDUSTRY CORP.) 07 April 2023 (2023-04-07) <br> entire document | 1-8 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **06 June 2025** | **12 June 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

<div style="text-align:center">27</div>

# EP 4 711 741 A1

## INTERNATIONAL SEARCH REPORT

International application No.

**PCT/CN2025/094432**

### C. DOCUMENTS CONSIDERED TO BE RELEVANT

| Category* | Citation of document, with indication, where appropriate, of the relevant passages | Relevant to claim No. |
|---|---|---|
| A | CN 116296203 A (CHINA SHIP SCIENTIFIC RESEARCH CENTER) 23 June 2023 (2023-06-23)<br>entire document | 1-8 |
| A | CN 117801532 A (SHANGHAI OCEAN UNIVERSITY) 02 April 2024 (2024-04-02)<br>entire document | 1-8 |
| A | KR 101617439 B1 (KOREA INSTITUTE OF OCEAN SCIENCE & TECHNOLOGY) 03 May 2016 (2016-05-03)<br>entire document | 1-8 |
| A | KR 101928034 B1 (KOREA INSTITUTE OF OCEAN SCIENCE & TECHNOLOGY) 11 December 2018 (2018-12-11)<br>entire document | 1-8 |
| A | KR 102520823 B1 (KOREA CONFORMITY LABORATORIES) 11 April 2023 (2023-04-11)<br>entire document | 1-8 |
| A | KR 20040099728 A (KOREA INSTITUTE OF MACHINERY & MATERIALS) 02 December 2004 (2004-12-02)<br>entire document | 1-8 |
| A | US 2017355431 A1 (KOREA INSTITUTE OF OCEAN SCIENCE & TECHNOLOGY) 14 December 2017 (2017-12-14)<br>entire document | 1-8 |
| A | WO 2023109454 A1 (QINGDAO UNIVERSITY OF SCIENCE & TECHNOLOGY) 22 June 2023 (2023-06-22)<br>entire document | 1-8 |

Form PCT/ISA/210 (second sheet) (July 2022)

## INTERNATIONAL SEARCH REPORT
### Information on patent family members

| | International application No. |
|---|---|
| | **PCT/CN2025/094432** |

| Patent document cited in search report | | | Publication date (day/month/year) | Patent family member(s) | | | Publication date (day/month/year) |
|---|---|---|---|---|---|---|---|
| CN | 118624397 | A | 10 September 2024 | None | | | |
| CN | 109855971 | A | 07 June 2019 | None | | | |
| CN | 103926099 | A | 16 July 2014 | None | | | |
| CN | 106323789 | A | 11 January 2017 | None | | | |
| CN | 115931614 | A | 07 April 2023 | None | | | |
| CN | 116296203 | A | 23 June 2023 | None | | | |
| CN | 117801532 | A | 02 April 2024 | None | | | |
| KR | 101617439 | B1 | 03 May 2016 | None | | | |
| KR | 101928034 | B1 | 11 December 2018 | None | | | |
| KR | 102520823 | B1 | 11 April 2023 | None | | | |
| KR | 20040099728 | A | 02 December 2004 | KR | 100531200 | B1 | 25 November 2005 |
| US | 2017355431 | A1 | 14 December 2017 | JP | 2017222336 | A | 21 December 2017 |
| | | | | JP | 6271689 | B2 | 31 January 2018 |
| | | | | US | 9849954 | B1 | 26 December 2017 |
| | | | | EP | 3257740 | A1 | 20 December 2017 |
| | | | | EP | 3257740 | B1 | 14 August 2019 |
| | | | | CN | 107487427 | A | 19 December 2017 |
| | | | | CN | 107487427 | B | 04 June 2019 |
| | | | | KR | 101681316 | B1 | 02 December 2016 |
| WO | 2023109454 | A1 | 22 June 2023 | CN | 114608938 | A | 10 June 2022 |
| | | | | CN | 219532699 | U | 15 August 2023 |

Form PCT/ISA/210 (patent family annex) (July 2022)